# FASCICULE DE BREVET EUROPEEN

(11) **EP 3 205 901 B1**
(45) Date de publication et mention de la délivrance du brevet: **01.08.2018**
(21) Numéro de dépôt: 17154693.0
(22) Date de dépôt: 03.02.2017
(51) Int. Cl.: F16F 15/121, F16F 15/133

(54) **AMORTISSEUR DE TORSION**
TORSIONSDÄMPFER
VIBRATION DAMPER

(30) Priorité: 11.02.2016 FR 1651090
(43) Date de publication de la demande: 16.08.2017
(73) Titulaire: Valeo Embrayages, 80009 Amiens Cedex 2 (FR)
(72) Inventeur: LOPEZ PEREZ, Carlos, 28005 MADRID (ES); FENIOUX, Daniel, 80480 SALEUX (FR); DEQUESNES, Laurent, 80800 FOUILLOY (FR); BOULET, Jérôme, 60510 OROER (FR)
(74) Mandataire: Cardon, Nicolas

(56) Documents cités:
- EP-A1- 2 530 354
- FR-A1- 3 000 155

## Description

### Domaine technique de l'invention

L'invention se rapporte à un amortisseur de torsion destiné à équiper un dispositif de transmission de couple. L'invention se rapporte plus particulièrement au domaine des transmissions pour véhicule automobile, l'invention étant destinée à transmettre le couple moteur entre le moteur et les roues du véhicule. Cet amortisseur peut être appliqué aussi bien à un dispositif de transmission pour automobile à boite manuelle, tel qu'un disque de friction amorti ou un double volant amortisseur, ainsi qu'à un dispositif de transmission pour automobile à boite automatique, tel qu'un convertisseur de couple ou lock-up.

### Etat de la technique

On connait des amortisseurs de torsion dont les éléments d'entrée et de sortie sont couplés en rotation par des moyens d'amortissement permettant de transmettre un couple et d'amortir les acyclismes de rotation. Les moyens d'amortissement sont généralement des ressorts hélicoïdaux, cintrés, disposés, de façon circonférentielle, dans une chambre annulaire, étanche, qui est formée entre les éléments d'entrée et de sortie.

L'amortissement proposé par ces amortisseurs n'est pas tout à fait satisfaisant, notamment en raison des frottements importants, et il a été proposé également de réaliser des amortisseurs de torsion à lame, comme cela est décrit dans le document FR3000155 qui illustre un amortisseur de torsion comportant des moyens élastiques d'amortissement formés par une lame élastique dotée d'une came, et coopérant avec un suiveur de came.

On connait aussi l'amortisseur à lame du document FR2938030.

### Objet de l'invention

L'invention améliore les solutions de l'art antérieur et propose un amortisseur de torsion à lame élastique optimisé, et dont la résistance des lames et des suiveurs de came est améliorée.

L'invention concerne ainsi un amortisseur de torsion pour dispositif de transmission de couple, notamment pour automobile, en particulier pour un dispositif d'embrayage, l'amortisseur comportant :
- un premier élément,
- un second élément mobile en rotation par rapport au premier élément autour d'un axe de rotation X,
- un organe de transmission porté par le second élément, cet organe de transmission comportant une lame élastique agencée pour fléchir pour transmettre un couple de rotation entre ces deux éléments, la flexion de la lame élastique étant accompagnée d'une rotation relative des premier et second éléments selon l'axe de rotation X pour amortir les acyclismes de rotation entre le premier élément et le second élément, la lame élastique comportant une surface de came,
- un suiveur de came porté par le premier élément et agencé pour se déplacer sur la surface de came,
caractérisé en ce que, dans un plan comprenant l'axe de rotation X de l'amortisseur et contenant un point de contact entre le suiveur de came et la surface de came, la surface de came présente un profil courbe.

Ainsi, grâce à ce profil courbe, les contraintes de Hertz générées par le roulement du suiveur de came sur la surface de came peuvent être maitrisées. Il est possible d'éviter des accumulations excessives de contraintes, notamment sur des zones sensibles de la lame et du suiveur de came, notamment en cas de basculement relatif entre le lame et le suiveur de came, c'est-à-dire lorsque l'inclinaison du suiveur de came et de la lame évolue. La lame et le suiveur de came deviennent ainsi plus résistants. Aussi, le profil courbe est agencé pour éloigner les concentrations de contraintes des coins de la lame. On entend par coins les zones de jonction entre la surface de came et les flancs de la lame.

Selon d'autres modes de réalisation avantageux, l'amortisseur de torsion peut présenter une ou plusieurs des caractéristiques suivantes :
- le profil courbe de la surface de came s'étend sur toute l'épaisseur de la lame.
- le profil courbe de la surface de came présente un extremum et l'amortisseur est agencé pour que cet extremum soit sur la zone de contact entre la surface de came et le suiveur de came.
- l'extremum est éloigné des coins de la lame. La distance séparant l'extremum du coin de lame le plus proche est supérieur au quart de l'épaisseur de la lame, notamment supérieur au tiers de l'épaisseur de la lame. Ainsi, une grande partie des contraintes de Hertz sont réparties au voisinage de l'extremum. Ainsi, en comparaison avec les solutions de l'art antérieur dans lesquelles les profils de la surface de came et du suiveur de came sont totalement droits, on empêche l'apparition de zones de concentrations excessives de contraintes, notamment dans les coins de la lame, notamment lorsque des légers phénomènes de basculement interviennent et que l'inclinaison entre le suiveur de came et la surface de came est modifiée.
- l'extremum est situé sensiblement à mi-épaisseur de la lame.
- le profil courbe de la surface de came présente une symétrie par un plan perpendiculaire à l'axe de rotation et passant par la mi épaisseur de la lame.
- le profil courbe de la surface de came comporte un arc de cercle. Ainsi, le profil courbe est facile à réaliser.
- cet arc de cercle présente une ouverture angulaire inférieure ou égale à 180°, notamment inférieure ou égale à 90°, en particulier inférieure ou égale à 45°, par exemple comprise entre 5° et 20°.
- la valeur du rayon de cet arc de cercle est par exemple comprise entre le quart et les trois quarts de la distance radiale séparant l'axe de rotation de l'amortisseur du suiveur de came, de préférence entre le tiers et les deux tiers de la distance radiale séparant l'axe de rotation de l'amortisseur du suiveur de came, par exemple sensiblement égale à la moitié de la distance radiale séparant l'axe de rotation de l'amortisseur du suiveur de came. Ainsi, pression Hertzienne est optimisée.
- l'arc de cercle du profil courbe de la surface de came s'étend sur toute l'épaisseur de la lame.
- le profil courbe de la surface de came est dépourvu d'arête vive.
- la surface de came présente, sur toute son étendue circonférentielle autour de l'axe de rotation, ledit profil courbe.
- dans un plan comprenant l'axe de rotation de l'amortisseur et contenant un point de contact entre le suiveur de came et la surface de came, le suiveur de came présente un profil courbe.
- le profil courbe du suiveur de came présente également un extremum et l'amortisseur est agencé pour que cet extremum soit sur la zone de contact entre la surface de came et le suiveur de came.
- l'extremum du suiveur de came est situé sensiblement à mi-épaisseur du suiveur de came.
- le profil courbe du suiveur de came comporte un arc de cercle.
- l'arc de cercle du profil courbe du suiveur de came s'étend sur toute l'épaisseur du suiveur de came.
- les profils courbes du suiveur de came et de la surface de came présentent des formes permettant leur emboitement. Ainsi, il est possible de limiter le débattement axial entre le suiveur de came et la lame.
- l'un du suiveur de came et de la surface de came présente un profil courbe concave, la concavité étant orientée vers l'autre du suiveur de came et de la surface de came qui présente un profil courbe convexe, le profil courbe convexe s'engageant à l'intérieur du profil courbe concave.
- l'extremum du profil courbe du suiveur de came et l'extremum du profil courbe de la surface de came sont sur la zone de contact entre le suiveur de came et la surface de came.
- les deux profils courbes présentent des formes géométriques complémentaires.
- les deux profils courbes présentent des arcs de cercle sensiblement de même rayon.
- le profil courbe concave présente un arc de cercle dont le rayon est supérieur au rayon de l'arc de cercle du profil courbe convexe. Ainsi, on écarte la zone de contact entre le suiveur de came et la surface de came des coins de la lame. De plus, un léger déplacement relatif axial entre le suiveur de came et la surface de came est possible en cas d'efforts axiaux sur la lame. Ceci permet de limiter l'apparition et la transmission excessive de contraintes dues à des charges axiales reçues par les lames.
- le rayon de l'arc de cercle du profil courbe concave est au plus 50% plus grand que le rayon de l'arc de cercle du profil courbe convexe, notamment au plus 30% plus grand que le rayon de l'arc de cercle du profil courbe convexe, par exemple environ 10% plus grand que le rayon de l'arc de cercle du profil courbe convexe.
- le suiveur de came comporte un galet agencé pour rouler sur la surface de came. Ainsi, grâce à une meilleure distribution des contraintes de Hertz, le roulement du galet est amélioré.
- le galet est monté mobile en rotation sur le premier élément, autour d'un axe sensiblement parallèle à l'axe de rotation de l'amortisseur,
- le profil courbe du suiveur de came est présent sur tout le pourtour du galet.
- le profil courbe de la surface de came est convexe. Autrement dit, la surface de came est bombée. Ainsi, il est possible d'optimiser la pression Hertzienne provenant du contact entre la lame et le suiveur de came et d'éviter les effets de bord, quelque soit la géométrie du suiveur de came dont le profil selon le plan P peut, par exemple, rester droit.
- lorsque le profil courbe de la surface de came est convexe, la surface de came coopère avec le suiveur de came présentant un profil courbe concave orienté en direction de la surface de came, de sorte que la transmission du couple entre la surface de came et le suiveur de came peut être effectuée via le profil courbe convexe de la surface de came à l'intérieur de la concavité du suiveur de came.
- selon ce mode de réalisation, lorsque le suiveur de came comporte un galet, il présente un pourtour présentant un profil concave, cette concavité étant ouverte vers l'extérieur du galet.
- le profil courbe convexe de la surface de came est un arc de cercle et le profil courbe concave du suiveur de came est un arc de cercle, le profil courbe convexe de la surface de came présentant un rayon inférieur ou égal à celui du profil courbe concave du suiveur de came.
- lorsque profil courbe convexe de la surface de came est un arc de cercle, et lorsque le profil courbe concave du suiveur de came est un arc de cercle, le profil courbe de la surface de came présente un rayon inférieur au rayon du profil courbe du suiveur de came. Ainsi, la pression Hertzienne est optimisée et un léger déplacement relatif axial entre le suiveur de came et la surface de came est possible en cas d'efforts axiaux sur la lame. Ceci permet de limiter l'apparition et la transmission excessives de contraintes dues à des charges axiales reçues ponctuellement par les lames.
- lorsque profil courbe convexe de la surface de came est un arc de cercle, et lorsque le profil courbe concave du suiveur de came est un arc de cercle, le profil courbe de la surface de came présente, si on le souhaite, un rayon sensiblement égal au rayon du profil courbe du suiveur de came. Ainsi, on évite, si on le souhaite, les décalages axiaux entre le suiveur de came et la lame.
- selon un autre mode de réalisation, le profil courbe de la surface de came est concave. Autrement dit, la surface de came est creusée dans lame.
- lorsque le profil courbe de la surface de came est concave, la surface de came coopère avec le suiveur de came qui présente un profil courbe convexe orienté en direction de la surface de came, de sorte que la transmission du couple entre la surface de came et le suiveur de came peut être effectuée via le profil courbe concave de la surface de came à l'intérieur de la concavité de la surface de came.
- selon ce mode de réalisation, lorsque le suiveur de came comporte un galet, il présente un pourtour présentant un profil convexe, ce profil convexe étant dirigé vers l'extérieur du galet.
- lorsque le profil courbe concave de la surface de came est un arc de cercle, et lorsque le profil courbe convexe du suiveur de came est un arc de cercle, le profil courbe de la surface de came présente un rayon supérieur ou égal à celui du profil courbe du suiveur de came.
- lorsque profil courbe concave de la surface de came est un arc de cercle, et lorsque le profil courbe convexe du suiveur de came est un arc de cercle, le profil courbe de la surface de came présente un rayon supérieur à celui du profil courbe du suiveur de came. Ainsi, un léger décalage axial reste possible entre le suiveur de came et la surface de came dans le cas où les lames sont sollicitées axialement.
- si on le souhaite, lorsque le profil courbe concave de la surface de came est un arc de cercle, et lorsque le profil courbe convexe du suiveur de came est un arc de cercle, le profil courbe de la surface de came présente un rayon sensiblement égal à celui du profil courbe du suiveur de came. Ainsi, on peut, si on le souhaite, empêcher le débattement axial entre le suiveur de came et la lame.
- selon un mode de réalisation de l'invention, dans un plan comprenant l'axe de rotation (X) de l'amortisseur et contenant un point de contact entre le suiveur de came et la surface de came, le suiveur de came présente un profil droit et la surface de came présente un profil courbe convexe. Ainsi, cette solution offre un compromis intéressant car, sans augmenter le cout de fabrication du suiveur de came, notamment lorsqu'il comporte un galet roulant sur la surface de came, la pression Hertzienne est optimisée par rapport aux solutions de l'état de la technique dans lesquelles le suiveur de came présente un profil droit roulant sur une surface de came au profil droit.
- si on le souhaite, le profil courbe de la surface de came est obtenu par usinage de la lame.
- si on le souhaite, la lame comporte au moins deux lamelles empilées l'une sur l'autre.
- les lamelles empilées présentent sensiblement la même épaisseur.
- la lame comporte deux lamelles qui viennent en contact via un plan de jonction.
- le plan de jonction est situé à mi épaisseur de la lame ainsi assemblée.
- l'extremum du profil courbe de surface de came est situé sur le plan de jonction des deux lamelles.
- les deux lamelles comportent chacune une portion de surface de came, ces deux portions étant symétriques par rapport au plan de jonction des deux lamelles.
- Si on le souhaite, le profil courbe de la surface de came comporte une portion d'ellipse
- la portion d'ellipse sur laquelle est formée la surface de came s'étend sur toute l'épaisseur de la lame.
- la portion d'ellipse est une demi ellipse.
- la portion d'ellipse de la surface de came est convexe, c'est-à-dire tournée vers le suiveur de came.
- la demi-ellipse comporte un grand rayon sur lequel est formée la surface de came et deux petits rayon sur lesquels sont formés les coins de la lame reliant chaque flanc à la surface de came. Ainsi, en obtient sur toute l'épaisseur de la lame un profil homogène et la répartition des contraintes est optimisée. Cela permet d'obtenir de façon très homogène une surface de came courbe et deux chanfreins arrondis.
- Si on le souhaite, le profil courbe du suiveur de came comporte une portion d'ellipse.
- les premiers et seconds éléments sont entrainés en rotation autour de l'axe X.
- les premier et second éléments occupent une position angulaire relative de repos en l'absence de transmission de couple,
- l'élasticité de la lame permet de maintenir le galet au contact de la surface de came.
- la lame élastique et le suiveur de came sont agencés de telle sorte qu'en fonctionnement, le suiveur de came exerce un effort de flexion sur la lame et produisant en réaction une force de réaction de la lame sur le suiveur de came apte à rappeler les premier et second éléments vers la position angulaire de repos.
- cette force de réaction est une force de rappel élastique exercée par la lame flexible sur le suiveur de came en réaction à la déformation élastique de la lame flexible.
- la force de réaction est une force de rappel élastique exercée uniquement par la lame flexible sur le suiveur de came en réaction à la déformation élastique de la lame flexible.
- la flexion de la lame est accompagnée d'une rotation relative entre les premier et second éléments.
- la lame élastique comporte une zone d'extrémité libre et l'amortisseur est agencé de sorte que cette zone d'extrémité libre se déplace radialement par rapport à l'axe de rotation de l'amortisseur lorsque le suiveur de came fait fléchir la lame. Autrement dit, la distance radiale séparant l'axe de rotation de ladite zone d'extrémité distale libre varie en fonction du débattement angulaire entre le premier et le second élément.
- la zone d'extrémité libre prolonge circonférentiellement la surface de came.
- le suiveur de came comporte un galet monté mobile en rotation sur lui-même sur le premier élément
- selon un autre mode de réalisation non représenté, le suiveur de came est un corps roulant mobile en rotation par rapport aux premier et second éléments. Le corps roulant se déplace d'une part sur la lame élastique portée par le second élément, notamment en roulant et en la faisant fléchir, d'autre part sur le premier élément. De préférence, en roulant sur la lame élastique portée par le second élément, le corps roulant accomplit un trajet curviligne sur le premier élément sur au moins un secteur angulaire prédéterminé, notamment en roulant.
- la lame est agencée pour se déformer dans un plan perpendiculaire à l'axe de rotation X.
- l'organe de transmission comporte deux lames agencées de façon symétrique par rapport à l'axe de rotation.
- l'organe de transmission comporte plusieurs lames régulièrement disposées autour de l'axe de rotation.
- Si on le souhaite, les lames sont agencées autour d'un corps annulaire
- le cas échéant, l'organe de transmission avec ses lames sont formés d'un seul tenant sur une même pièce, cette pièce pouvant elle-même être formée par un empilement de lamelles.
- en variante, l'amortisseur comporte au moins deux organes de transmission agencés par exemple de façon symétrique par rapport à l'axe de rotation.
- l'amortisseur comporte plusieurs organes de transmission régulièrement disposées autour de l'axe de rotation.
- chaque organe de transmission comporte une seule lame.
- l'organe de transmission comporte une portion de fixation fixée sur le second élément et une portion flexible comprenant la lame élastique.
- de préférence, la portion de fixation reste fixe, autrement dit elle ne fléchit pas, lorsque les premier et second éléments tournent l'un par rapport à l'autre.
- La surface de came et la portion de fixation sont reliées par un coude.
- La lame n'est liée au second élément que par l'intermédiaire de sa portion de fixation.
- l'amortisseur comporte deux lames élastiquement déformables portées par le second élément et l'amortisseur comporte deux suiveurs de came portés le premier élément, les suiveurs de came étant respectivement agencés pour coopérer avec l'une et l'autre des deux lames élastiquement déformables.
- les lames élastiquement déformables sont symétriques par rapport à l'axe de rotation.
- le galet est monté mobile en rotation sur le premier élément, par l'intermédiaire d'un palier à roulement.
- la surface de came s'étend circonférentiellement autour de l'axe de rotation X.
- la surface de came comporte une position neutre occupée par le suiveur de came lorsqu'aucun couple n'est transmis par l'amortisseur.
- lorsque les premier et second éléments sont en position angulaire de repos, le suiveur de came est sur la position neutre de la surface de came.
- l'épaisseur du suiveur de came est plus grande que l'épaisseur de la surface de came.
- L'épaisseur du galet est plus grande que l'épaisseur de la lame
- Le profil courbe de la surface de came peut comporter une portion droite.
- Cette portion droite est sensiblement parallèle à l'axe de rotation de l'amortisseur
- L'extremum du profil courbe de la surface de came est agencé sur cette portion droite.
- Le plan de jonction des deux lamelles coupe la portion droite.
- Le plan de jonction est un plan de symétrie pour la portion droite.
- Dans un plan comprenant l'axe de rotation X de l'amortisseur et contenant un point de contact entre le suiveur de came et la surface de came, la portion droite du profil courbe s'étend sur moins de 70% de ce profil, en particulier moins 50% de ce profil courbe, par exemple sur moins de 30% , notamment moins de 10%.
- Dans un plan comprenant l'axe de rotation X de l'amortisseur et contenant un point de contact entre le suiveur de came et la surface de came, la portion droite s'étend sur moins de 70% de ce profil, en particulier moins 50% de l'épaisseur de la lame, par exemple sur moins de 30% de l'épaisseur de la lame, notamment moins de 10%.
- Dans un plan comprenant l'axe de rotation X de l'amortisseur et contenant un point de contact entre le suiveur de came et la surface de came, le profil de la surface de came de la lame est dépourvu de portion droite s'étendant sur plus de 30% de ce profil, en particulier sur plus de 50% de ce profil, notamment sur plus de 70% de ce profil.
- Dans un plan comprenant l'axe de rotation X de l'amortisseur et contenant un point de contact entre le suiveur de came et la surface de came, le profil de la surface de came de la lame est dépourvu de portion droite s'étendant sur plus de 30% de l'épaisseur de la lame, en particulier sur plus de 50% de l'épaisseur de la lame, notamment sur plus de 70% de l'épaisseur de la lame.
- La dimension axialle de la portion droite est plus petite que la moitié de la dimension axiale (épaisseur) de la lame.

L'amortisseur est un double volant amortisseur dans lequel le premier élément est formé par l'un des volants d'inertie primaire et secondaire et le second élément est formé par l'autre des volants d'inertie primaire et secondaire.

L'invention porte également sur un amortisseur de torsion pour dispositif de transmission de couple, notamment pour automobile, en particulier pour un dispositif d'embrayage, l'amortisseur comportant :
- un premier élément,
- un second élément mobile en rotation par rapport au premier élément autour d'un axe de rotation X,
- un organe de transmission porté par le second élément, cet organe de transmission comportant une lame élastique agencée pour fléchir pour transmettre un couple de rotation entre ces deux éléments, la flexion de la lame élastique étant accompagnée d'une rotation relative des premier et second éléments selon l'axe de rotation X pour amortir les acyclismes de rotation entre le premier élément et le second élément, la lame élastique comportant une surface de came,
- un suiveur de came porté par le premier élément, le suiveur de came comportant un galet monté mobile en rotation sur le premier élément et agencé pour rouler sur la surface de came,
caractérisé en ce que, le galet et la surface de came sont agencés de façon à s'emboiter l'un dans l'autre pour transmettre le couple, et en ce que le suiveur de came comporte au moins une rondelle de frottement, l'emboitement de la surface de came et du galet permettant, lorsque des efforts axiaux sont exercés sur la lame, de déplacer axialement le galet de façon à ce qu'il frotte contre la rondelle de frottement de façon à reprendre les efforts axiaux.

Selon d'autres modes de réalisation avantageux, cet amortisseur de torsion peut présenter une ou plusieurs des caractéristiques suivantes :
- L'un parmi le galet et la surface de came comporte, dans un plan comprenant l'axe de rotation X de l'amortisseur et contenant un point de contact entre le suiveur de came et la surface de came, un profil convexe et l'autre parmi le galet et la surface de came comporte un profil concave.
- Le galet est monté mobile en rotation autour d'une tige. Cette tige s'étend de préférence parallèlement à l'axe de rotation de l'amortisseur.
- Le galet est disposé axialement entre deux rondelles de frottement, de façon à frotter sur l'une d'entre elles lorsque des efforts axiaux sont transmis par la lame au galet.
- Le galet comporte de chaque côté un épaulement logeant partiellement une rondelle de frottement.
- Le suiveur de came comporte des corps roulants tels que des billes ou des rouleaux agencés pour rouler entre une piste de roulement intérieure et une piste de roulement extérieure. Ainsi, en améliorant la répartition des contraintes de Hertz, l'usure de ces corps roulants est limitée.
- Les deux rondelles délimitent axialement un espace intérieur de roulement dans lequel sont agencés les corps roulants.
- Les rondelles sont disposées axialement de part et d'autre des pistes de roulement.
- Les rondelles sont enfilées autour de la piste de roulement intérieure.

L'invention concerne aussi un amortisseur de torsion pour dispositif de transmission de couple, notamment pour automobile, en particulier pour un dispositif d'embrayage, l'amortisseur comportant :
- un premier élément,
- un second élément mobile en rotation par rapport au premier élément autour d'un axe de rotation X,
- un organe de transmission porté par le second élément, cet organe de transmission comportant une lame élastique agencée pour fléchir pour transmettre un couple de rotation entre ces deux éléments, la flexion de la lame élastique étant accompagnée d'une rotation relative des premier et second éléments selon l'axe de rotation X pour amortir les acyclismes de rotation entre le premier élément et le second élément, la lame élastique comportant une surface de came,
- un suiveur de came porté par le premier élément et agencé pour se déplacer sur la surface de came,
caractérisé en ce que, dans un plan comprenant l'axe de rotation X de l'amortisseur et contenant un point de contact entre le suiveur de came et la surface de came, la surface de came présente un profil convexe.

Ainsi, avec un profil convexe orienté en direction du suiveur de came, il est possible d'optimiser la répartition des contraintes de Hertz et d'éviter une accumulation excessive de contraintes, notamment sur des zones sensibles de la lame et du suiveur de came. Il est en particulier possible d'éviter les effets de bords.

Selon d'autres modes de réalisation avantageux, cet amortisseur de torsion peut présenter une ou plusieurs des caractéristiques suivantes :
- la surface de came présente, sur toute son étendue circonférentielle autour de l'axe de rotation, ledit profil convexe.
- Le suiveur de came comporte un galet agencé pour rouler sur la surface de came.
- Le suiveur de came présente, dans le plan comprenant l'axe de rotation X de l'amortisseur et contenant un point de contact entre le suiveur de came et la surface de came, un profil droit ou concave.
- Le profil droit ou concave du suiveur de came est formé sur le pourtour extérieur du galet.

L'invention concerne aussi une lame tel que décrite ci-dessus, pour un amortisseur de torsion, pour dispositif de transmission de couple, notamment pour automobile, en particulier pour un dispositif d'embrayage.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux figures annexées.

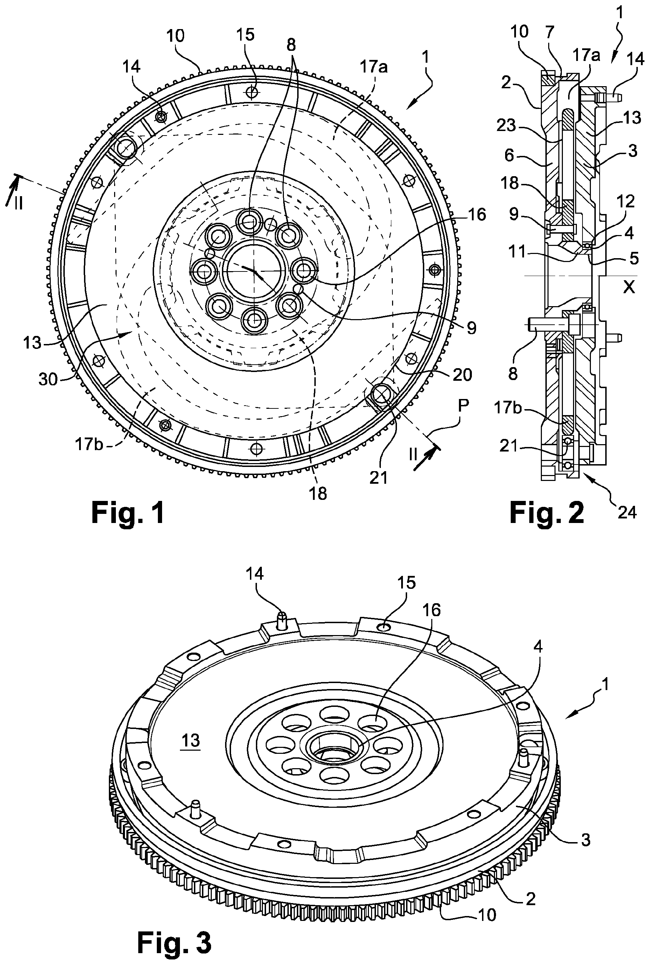

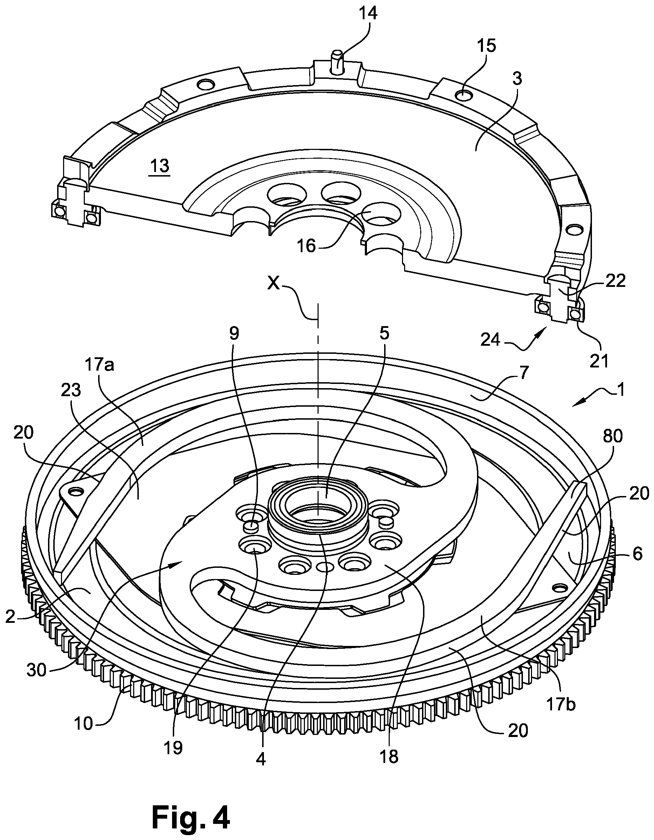

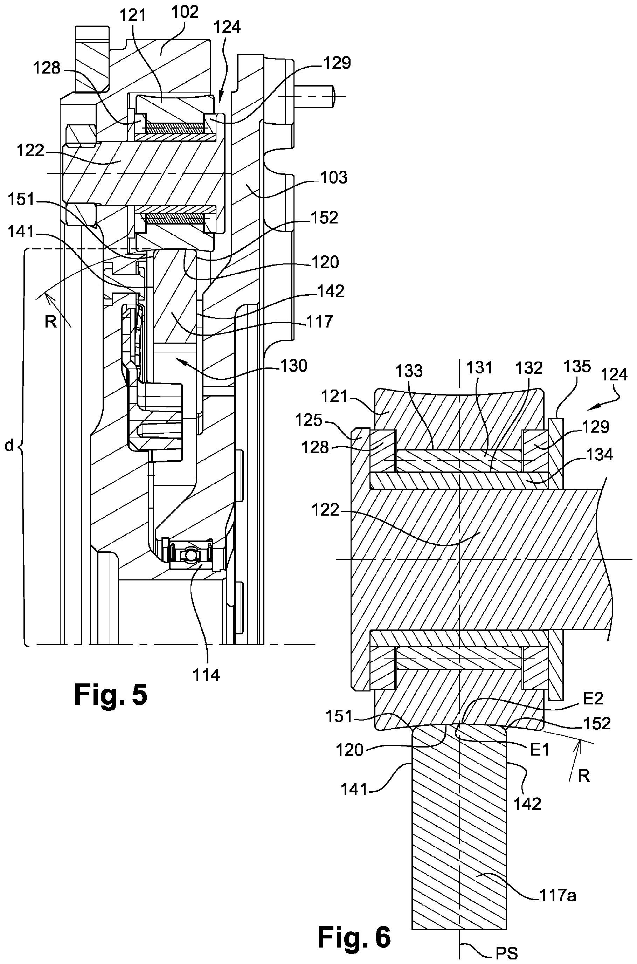

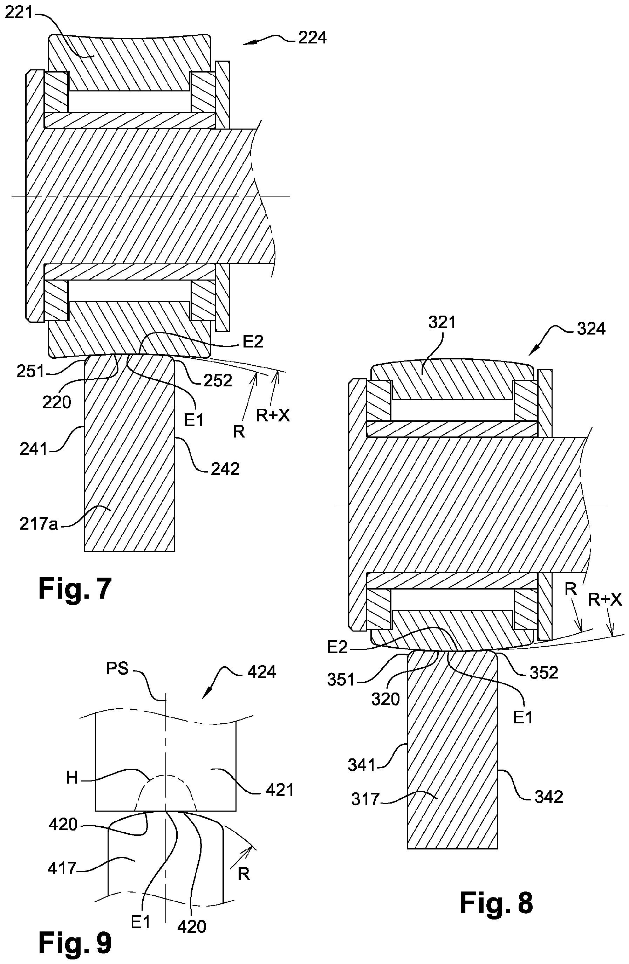

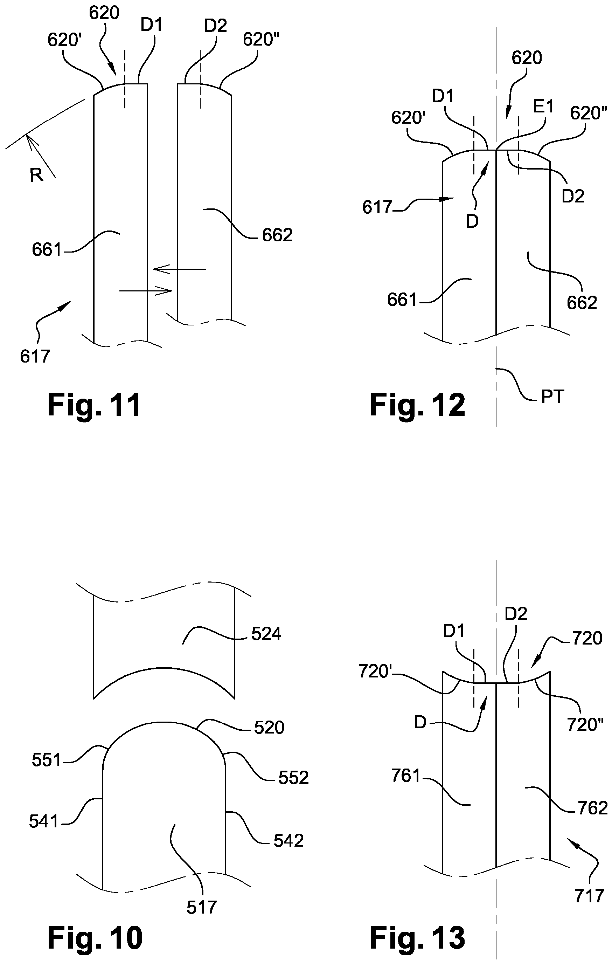

Sur ces figures :
- **La** **figure 1** est une vue de face d'un double volant amortisseur illustrant le fonctionnement général d'un amortisseur de torsion, dans laquelle l'organe de transmission et les suiveurs de came sont représentés en pointillés.
- **La** **figure 2** est une vue en coupe du double volant amortisseur de la figure 1, selon II-II, illustrant l'invention.
- **La** **figure 3** est une vue en perspective du double volant amortisseur de la figure 1.
- **La** **figure 4** est une vue en perspective du double volant amortisseur des figures 1 à 3, dans laquelle le volant d'inertie secondaire est représenté, partiellement arraché, et désassemblé du volant d'inertie primaire.
- **La** **figure 5** est une vue schématique en coupe, selon un plan P comprenant l'axe de rotation X de l'amortisseur et contenant un point de contact entre le suiveur de came et la surface de came, d'un deuxième mode de réalisation de l'invention.
- **La** **figure 6** est une vue agrandie schématique de la figure 5.
- **La** **figure 7** est une vue schématique agrandie en coupe, selon un plan P comprenant l'axe de rotation X de l'amortisseur et contenant un point de contact entre le suiveur de came et la surface de came, d'un troisième mode de réalisation de l'invention.
- **La** **figure 8** est une vue schématique agrandie en coupe, selon un plan P comprenant l'axe de rotation X de l'amortisseur et contenant un point de contact entre le suiveur de came et la surface de came, d'un quatrième mode de réalisation de l'invention.
- **La** **figure 9** est une vue schématique agrandie en coupe, selon un plan P comprenant l'axe de rotation X de l'amortisseur et contenant un point de contact entre le suiveur de came et la surface de came, d'un cinquième mode de réalisation de l'invention.
- **La** **figure 10** est une vue schématique agrandie en coupe, selon un plan P comprenant l'axe de rotation X de l'amortisseur et contenant un point de contact entre le suiveur de came et la surface de came, d'un sixième mode de réalisation de l'invention.
- **Les** **figures 11 et 12** sont des vues schématique en coupe selon un plan P comprenant l'axe de rotation X de l'amortisseur et contenant un point de contact entre le suiveur de came et la surface de came, d'un septième mode de réalisation de l'invention.
- **La** **figure 13** est une vue schématique en coupe selon un huitième mode de réalisation, selon un plan P.

Dans la description et les revendications, on utilisera, les termes "externe" et "interne" ainsi que les orientations "axiale" et "radiale" pour désigner, selon les définitions données dans la description, des éléments de l'amortisseur de torsion. Par convention, l'orientation "radiale" est dirigée orthogonalement à l'axe (X) de rotation des éléments de l'amortisseur de torsion déterminant l'orientation "axiale" et, de l'intérieur vers l'extérieur en s'éloignant dudit axe, l'orientation "circonférentielle" est dirigée orthogonalement à l'axe de rotation de l'amortisseur de torsion et orthogonalement à la direction radiale. Ainsi, un élément décrit comme se développant circonférentiellement est un élément dont une composante se développe selon une direction circonférentielle. De même, l'indication d'un angle s'interprète comme délimité par deux droites d'un plan perpendiculaire à l'axe de rotation X et sécante au niveau dudit axe de rotation X. Les termes "externe" et "interne" sont utilisés pour définir la position relative d'un élément par rapport à un autre, par référence à l'axe de rotation de l'amortisseur de torsion, un élément proche de l'axe est ainsi qualifié d'interne par opposition à un élément externe situé radialement en périphérie. L'épaisseur de la lame s'étend parallèlement à l'axe X.

On se réfère d'abord aux figures 1 à 4 qui illustrent le fonctionnement général d'un amortisseur de torsion à lames élastiquement déformables équipant un double volant amortisseur 1. Les premier et second éléments sont formés ici respectivement par les volants d'inertie secondaire et primaire. Le double volant amortisseur 1 comprend un volant d'inertie primaire 2, destiné à être fixé en bout d'un vilebrequin d'un moteur à combustion interne, non représenté, et un volant d'inertie secondaire 3 qui est centré et guidé sur le volant primaire 2 au moyen d'un palier à roulement à billes 4. Le volant secondaire 3 est destiné à former le plateau de réaction d'un embrayage, non représenté, relié à l'arbre d'entrée d'une boîte de vitesse. Les volants d'inertie primaire 2 et secondaire 3 sont destinés à être montés mobiles autour d'un axe de rotation X et sont, en outre, mobiles en rotation l'un par rapport à l'autre autour dudit axe X.

Le volant primaire 2 comporte un moyeu 5 radialement interne supportant le palier à roulement 4, une portion annulaire 6 s'étendant radialement depuis le moyeu 5 et une portion cylindrique 7 s'étendant axialement, du côté opposé au moteur, depuis la périphérie externe de la portion annulaire 6. La portion annulaire 6 est pourvue, d'une part, d'orifices de passage de vis 8 de fixation, destinés à la fixation du volant primaire 2 sur le vilebrequin du moteur et, d'autre part, d'orifices de passage de rivets 9 pour la fixation d'un organe de transmission sur le volant primaire 2. Le volant primaire 2 porte, sur sa périphérie extérieure, une couronne dentée 10 pour l'entraînement en rotation du volant primaire 2, à l'aide d'un démarreur.

Le moyeu 5 du volant primaire comporte un épaulement 11 servant à l'appui d'une bague interne du palier à roulement 4 et qui retient ladite bague interne en direction du moteur. De même, le volant secondaire 3 comporte sur sa périphérie interne un épaulement 12 servant à l'appui d'une bague externe du palier à roulement 4 et retenant ladite bague externe en direction opposée au moteur.

Le volant secondaire 3 comporte une surface annulaire plane 13, tournée du côté opposé au volant primaire 2, formant une surface d'appui pour une garniture de friction d'un disque d'embrayage, non représenté. Le volant secondaire 3 comporte, à proximité de son bord externe, des plots 14 et des orifices 15 servant au montage d'un couvercle d'embrayage. Le volant secondaire 3 comporte en outre des orifices 16, disposés en vis-à-vis des orifices formés dans le volant primaire 2, et destinés au passage des vis 8, lors du montage du double volant amortisseur 1 sur le vilebrequin.

Les volants primaire 2 et secondaire 3 sont couplés en rotation par un organe de transmission 30. Dans le mode de réalisation représenté sur les figures 1 à 4, ce moyen d'amortissement comporte deux lames élastiques 17, 17b montées solidaires en rotation du volant primaire 2. Pour ce faire, les lames élastiques 17, 17b sont portées par un corps annulaire 18 pourvu d'orifices permettant le passage des rivets 9 de fixation au volant primaire 2. Le corps annulaire 18 comporte en outre des orifices 19 pour le passage des vis 8 de fixation du double volant amortisseur 1 au nez du vilebrequin. Les deux lames élastiques 17, 17b sont symétriques par rapport à l'axe de rotation X du disque d'embrayage.

Les lames élastiques 17, 17b présentent une surface de came 20 qui s'étend circonférentiellement autour de l'axe de rotation X.

Le volant secondaire 3 comporte deux suiveurs de came 24 agencés pour coopérer chacun avec une surface de came 20. Les lames élastiques 17, 17b comportent une portion flexible s'étendant de manière sensiblement circonférentielle. Chaque lame élastique 17, 17b peut, au choix, être réalisée d'un seul tenant ou être composée d'une pluralité de lamelles disposées axialement les unes contre les autres.

Les suiveurs de came 24 comportent des galets 21 portés par des tiges cylindriques 22 fixées d'une part au volant secondaire 3 et d'autre part à un voile 23. Les galets 21 sont montés mobiles en rotation sur les tiges cylindriques 22 autour d'un axe de rotation parallèle à l'axe de rotation X. Les galets 21 sont maintenus en appui contre leur surface de came 20 et sont agencés pour rouler contre ladite surface de came 20 lors d'un mouvement relatif entre les volants primaire 2 et secondaire 3. Les galets 21 sont disposés radialement à l'extérieur de leur surface de came 20 respective de sorte à maintenir radialement les lames élastiques 17, 17b lorsqu'elles sont soumises à la force centrifuge. De façon à réduire les frottements parasitaires susceptibles d'affecter la fonction d'amortissement, les galets 21 sont avantageusement montés en rotation sur les tiges cylindriques par l'intermédiaire d'un palier à roulement. A titre d'exemple, le palier à roulement pourra être un roulement à billes ou à rouleaux. Dans un mode de réalisation, les galets 21 présentent un revêtement anti-friction.

Les volants primaire et secondaire 2 et 3 occupent une position angulaire relative de repos en l'absence de transmission de couple. La surface de came 20 comporte une position neutre occupée par le suiveur de came 24 lorsqu'aucun couple n'est transmis par l'amortisseur. Lorsque les volants primaire et secondaire 2 et 3 sont en position angulaire de repos, le suiveur de came est sur la position neutre de la surface de came 20.

Chaque surface de came 20 est agencée de telle sorte que, pour un débattement angulaire entre le volant primaire 2 et le volant secondaire 3, par rapport à une position angulaire relative de repos, chaque galet 21 se déplace sur la surface de came 20 qui lui est propre et, ce faisant, exerce un effort de flexion sur la lame élastique 17, 17b. Par réaction, la lame élastique 17, 17b exerce sur le galet 21 une force de rappel qui tend à ramener les volants primaire 2 et secondaire 3 vers leur position angulaire relative de repos. Cette force de réaction est une force de rappel élastique exercée par la lame flexible sur le galet 21 en réaction à la flexion élastique de la lame 17a, 17b. La force de réaction est une force de rappel élastique exercée uniquement par la lame flexible 17a, 17b sur le galet 21 en réaction à la déformation élastique de la lame. Le mouvement de flexion de la lame est accompagné d'une rotation relative entre les volants primaire et secondaire pour amortir les acyclismes de rotation entre les volants primaire et secondaire. Les suiveurs de came 24 se déplacent sur les surfaces de came 20 lors de cette rotation relative.

Ainsi, les lames élastiques 17, 17b sont aptes à transmettre un couple entraînant du volant primaire 2 vers le volant secondaire 3 (sens direct) et un couple résistant du volant secondaire 3 vers le volant primaire 2 (sens rétro). Par ailleurs, l'élasticité des lames permet de maintenir les galets au contact des surfaces de came.

Chaque lame élastique comporte une zone d'extrémité libre 80 et l'amortisseur est agencé de sorte que cette zone d'extrémité libre 80 se rapproche de l'axe de rotation de l'amortisseur lorsque le suiveur de came 24 fait fléchir la lame. Autrement dit, la distance radiale séparant l'axe de rotation de ladite zone d'extrémité distale libre varie en fonction du débattement angulaire entre le premier et le second élément. Cette zone d'extrémité libre 80 prolonge circonférentiellement la surface de came 20.

La figure 2 présente dans sa partie inférieure l'amortisseur dans un plan P comprenant l'axe de rotation (X) de l'amortisseur et contenant un point de contact entre le suiveur de came 24 et la surface de came 20. La surface de came 20 présente un profil courbe.

La surface de came 20 présente avantageusement sur toute son étendue circonférentielle autour de l'axe de rotation X, tel que représenté sur la figure 4, ledit profil courbe.

Sur les figures 5 à 6, est représenté plus précisément un second mode de réalisation de l'amortisseur de torsion selon. Les éléments identiques ou remplissant la même fonction à ceux des figures 1 à 4 sont référencés avec les mêmes nombres augmentés de 100.

Il s'agit ici d'un double volant amortisseur comportant :
- un premier élément, ici le volant d'inertie primaire 102,
- un second élément, ici le volant d'inertie secondaire 103 mobile en rotation par rapport au volant primaire autour de l'axe de rotation X,
- un organe de transmission 130 porté par le volant secondaire, cet organe de transmission comportant une lame élastique 117 agencée pour fléchir pour transmettre un couple de rotation entre les deux volants, la flexion de la lame élastique 117 étant accompagnée d'une rotation relative entre volants primaire et secondaire selon l'axe de rotation X pour amortir les acyclismes de rotation entre les volants primaire et secondaire, la lame élastique comportant une surface de came 120,
- un suiveur de came 124 porté par le volant primaire 102 et agencé pour se déplacer sur la surface de came.

Conformément à l'invention, dans un plan P comprenant l'axe de rotation X de l'amortisseur et contenant un point de contact entre le suiveur de came 124 et la surface de came 120, la surface de came 120 présente un profil courbe.

De préférence, le profil courbe est agencé pour éloigner les concentrations de contraintes des coins de la lame. Ainsi, la lame devient plus résistante.

Le profil courbe de la surface de came 120 s'étend sur toute l'épaisseur de la lame 117.

Comme on le voit sur la figure 6, les profils courbes du suiveur de came 124 et de la surface de came 120 présentent des formes permettant leur emboitement. Ainsi, il est possible de limiter les phénomènes de décalage axial entre le suiveur de came et la surface de came.

Sur les figures 5 et 6, on voit que le profil courbe de la surface de came est convexe. Autrement dit, la surface de came est bombée. On note que lorsque ce profil courbe s'étend sur toute l'épaisseur de la lame, cela permet d'arrondir également les coins 151 et 152 qui relient la surface de came aux deux flancs 141 et 142 de la lame 117a. En arrondissant ces coins et en obtenant deux chanfreins arrondis, on diminue les concentrations de contraintes et les risques de fissures dans ces endroits. La lame est ainsi nettement plus résistante. Le chanfreinage arrondi et la surface de came convexe sont réalisés avantageusement au cours d'une même opération d'usinage ou de découpe.

Les coins 151 et 152 ont un rayon de courbure plus petit que le rayon de courbure de la surface de came en contact avec le suiveur de came 124.

La surface de came 120 au profil convexe coopère avec le suiveur de came 124 qui présente un profil courbe concave orienté en direction de la surface de came 120 de sorte que la transmission du couple entre la surface de came 120 et le suiveur de came est effectuée via le profil courbe convexe de la surface de came 120 à l'intérieur de la concavité du suiveur de came.

Le suiveur de came 124 comporte ici un galet 121 qui présente un pourtour présentant un profil concave, cette concavité étant ouverte vers l'extérieur du galet.

Le profil courbe convexe de la surface de came 120 est un arc de cercle, et le profil courbe concave du suiveur de came 124 est un arc de cercle. Sur le mode de réalisation de la figure 6, le profil courbe de la surface de came 120 présente un rayon R sensiblement égal au rayon du profil courbe du suiveur de came. Ainsi, on peut empêcher avec cette solution le débattement axial entre le suiveur de came et la lame.

Sur la figure 6, on voit que le profil courbe de la surface de came 120 présente un extremum E1.

L'extremum E1 est éloigné des coins 151 et 152 de la lame. L'extremum E1 est situé sensiblement à mi-épaisseur de la lame 117a. Ainsi, l'extremum, au niveau duquel sont réparties une grande partie des contraintes de Hertz, est agencé sur une zone relativement centrale qui permet d'éviter les effets de bords excessifs, notamment en cas de basculement du suiveur de came par rapport à la lame.

On constate sur la figure 6 que le profil courbe de la surface de came 120 présente une symétrie par un plan PS perpendiculaire à l'axe de rotation et passant par la mi épaisseur de la lame 117.

Le profil courbe de la surface de came 120 comporte un arc de cercle.

Cet arc de cercle présente une ouverture angulaire d'environ 10 degrés.

La valeur du rayon R de cet arc de cercle est avantageusement comprise entre 1/3 et 2/3 de la distance radiale d séparant l'axe de rotation X de l'amortisseur du suiveur de came 124. Ici, cette valeur est proche de la moitié de la distance radiale d séparant l'axe de rotation de l'amortisseur du suiveur de came 124. Ainsi, la répartition des contraintes sur le profil courbe, ou sur l'épaisseur de la lame, est optimisée.

On remarque que l'arc de cercle du profil courbe de la surface de came 120 s'étend sur toute l'épaisseur de la lame 117. Le profil courbe de la surface de came 120 est dépourvu d'arête vive.

On constate également que dans le plan P comprenant l'axe de rotation (X) de l'amortisseur et contenant un point de contact entre le suiveur de came 124 et la surface de came 120, le suiveur de came 124 présente lui aussi un profil courbe.

L'épaisseur du suiveur de came 124, et en particulier l'épaisseur du galet, est plus grande que l'épaisseur de la surface de came 120. Le profil courbe du suiveur de came 124 comporte un arc de cercle qui s'étend sur une épaisseur supérieure à l'épaisseur de la surface de came 120.

Le profil courbe du suiveur de came 124 est présent sur tout le pourtour du galet 121.

Le profil courbe du suiveur de came présente également un extremum E2. Cet extremum E2 est situé sensiblement à mi-épaisseur du suiveur de came 124.

Le suiveur de came 124 est fixé au volant d'inertie primaire par la tige cylindrique 122. Cette tige comporte, du côté du volant d'inertie secondaire, un épaulement 125.

Le galet 121 est monté mobile en rotation autour de la tige par l'intermédiaire de rouleaux 131 agencés pour rouler entre une piste de roulement intérieure 132 et une piste de roulement extérieure 133.

La piste de roulement intérieure 132 est par exemple formée sur une entretoise 134 montée autour de la tige 122.

Lors du montage, l'entretoise vient en appui contre le volant d'inertie primaire, ici par l'intermédiaire d'une rondelle d'appui 135.

Deux rondelles 128 et 129 sont interposées respectivement entre l'épaulement 125 de la tige 122 et le galet 121, et entre la rondelle d'appui 135 et le galet 121

Les deux rondelles 128 et 129 délimitent axialement un espace intérieur de roulement dans lequel sont agencés les rouleaux 131.

Les rondelles 128 et 129 sont disposées axialement de part et d'autre des pistes de roulement 132 et 133. Ces rondelles sont enfilées autour de la piste de roulement intérieure 132.

Deux épaulements sont ménagés sur chaque face du galet pour loger partiellement ces rondelles 128 et 129.

Un jeu est laissé entre le galet 121 et ces rondelles 128 et 129.

Comme les rayons des profils courbes du galet 121 et de la surface de came 120 sont sensiblement égaux, les efforts axiaux susceptibles d'être exercés sur les lames ne génèrent pas de déplacement axial de la surface de came 120 par rapport au galet 121.

En conséquence, les charges axiales sont transmises par la surface de came 120 au suiveur de came 124. Ces efforts axiaux peuvent être repris au niveau du suiveur de came 124 par un frottement intervenant entre le galet 121, et les rondelles 128 ou129 en fonction de la direction d'application des efforts axiaux.

Ainsi, le suiveur de came assure une deuxième fonction, à savoir reprendre les efforts axiaux exercés sur la lame.

Sur la figure 7, un troisième mode de réalisation est représenté. Les éléments identiques ou remplissant la même fonction à ceux des figures 1 à 4 sont référencés avec les mêmes nombres augmentés de 200.

Le suiveur de came 224 comporte un galet 221 coopérant avec une lame élastique 217a dotée d'une surface de came 220. Le profil courbe convexe de la surface de came 220 est un arc de cercle, et le profil courbe concave du suiveur de came 224 est un arc de cercle. La différence avec le mode de réalisation précédent est que le profil courbe de la surface de came 220 présente un rayon R inférieur au rayon (R+X) du profil courbe du suiveur de came. Ainsi, un léger décalage axial reste possible entre le suiveur de came et la surface de came dans le cas où les lames sont sollicitées axialement.

L'amortisseur est agencé pour que le suiveur de came 224 et la surface de came 220 entrent en contact sur l'extremum E1.

Cet amortisseur est agencé pour que le suiveur de came 224 et la surface de came 220 entrent en contact sensiblement sur l'extremum E2, notamment en l'absence de charges axiales.

De préférence, l'extremum E2 du profil courbe du suiveur de came et l'extremum E1 du profil courbe de la surface de came sont sur la zone de contact entre le suiveur de came et la surface de came.

Sur la figure 8, un quatrième mode de réalisation est représenté. Les éléments identiques ou remplissant la même fonction à ceux des figures 1 à 4 sont référencés avec les mêmes nombres augmentés de 300.

Ici, le profil courbe de la surface de came 320 est concave. Autrement dit, la surface de came est creusée dans lame 317.

La surface de came concave 320 coopère avec le galet 321 du suiveur de came 324 qui présente un profil courbe convexe orienté en direction de la surface de came 320, de sorte que la transmission du couple entre la surface de came 320 et le suiveur de came 324 est effectuée via le profil courbe concave de la surface de came à l'intérieur de la concavité de la surface de came 320. Le galet 321 présente un pourtour au profil convexe, ce profil convexe étant dirigé vers l'extérieur du galet.

Le profil courbe concave de la surface de came 320 est un arc de cercle et le profil courbe convexe du galet 321 du suiveur de came 324 est un arc de cercle. Le profil courbe de la surface de came 320 présente un rayon (R+X) supérieur au rayon R du profil courbe du galet 321 du suiveur de came 324.

L'amortisseur est agencé pour que le suiveur de came 324 et la surface de came 320 entrent en contact sur l'extremum E1.

Cet amortisseur est agencé pour que le suiveur de came 324 et la surface de came 320 entrent en contact sensiblement sur l'extremum E2, notamment en l'absence de charges axiales.

Dans un autre mode de réalisation non représenté, ces deux rayons pourraient être sensiblement égaux pour empêcher le débattement axial entre le suiveur de came et la lame.

Sur la figure 9, un cinquième mode de réalisation est représenté. Les éléments identiques ou remplissant la même fonction à ceux des figures 1 à 4 sont référencés avec les mêmes nombres augmentés de 400.

. Dans un plan comprenant l'axe de rotation (X) de l'amortisseur et contenant un point de contact entre le suiveur de came et la surface de came, le galet 421 du suiveur de came 424 présente un profil droit et la surface de came 420 présente un profil courbe convexe. Ainsi, cette solution offre un compromis intéressant car, sans augmenter le cout de fabrication du suiveur de came, les contraintes de Hertz sont maitrisées par rapport aux solutions de l'état de la technique dans lesquelles le suiveur de came présente un profil droit roulant sur une surface de came au profil droit.

Le profil courbe de la surface de came présente un arc de cercle de rayon R s'étendant sur toute l'épaisseur de la lame 417.

L'amortisseur est agencé pour que le suiveur de came 424 et la surface de came 420 entrent en contact sur l'extremum E1 de l'arc de cercle.

Sur cette figure, la courbe de pression de Hertz H vue par le galet 421 est représentée. On voit que les contraintes sont localisées principalement au centre du galet, ce qui permet de limiter les effets de bord, même en cas de basculement du galet ou de la lame, c'est-à-dire lorsque l'inclinaison entre le suiveur de came et la surface de came est modifiée.

Sur la figure 10, un sixième mode de réalisation est représenté. Les éléments identiques ou remplissant la même fonction à ceux des figures 1 à 4 sont référencés avec les mêmes nombres augmentés de 500.

Le profil courbe de la surface de came 520 présente ici une portion d'ellipse.

Cette portion d'ellipse est une demi ellipse qui s'étend sur toute l'épaisseur de la lame 517.

Cette portion d'ellipse est convexe, c'est-à-dire tournée vers le suiveur de came 524.

On constate que la demi ellipse s'étend jusqu'aux flancs 541 et 542 de la lame 517 et inclut les coins arrondis 551 et 552 de la lame 517. Ainsi, on obtient sur toute l'épaisseur de la lame un profil homogène qui permet d'abaisser efficacement les contraintes sur la surface de came et sur les coins de la lame.

Si on le souhaite, le profil courbe du suiveur de came 524 comporte également une portion d'ellipse.

Dans les modes de réalisation des figures 5 à 10, le profil courbe de la surface de came peut être obtenu par usinage de la lame.

Sur les figures 11 et 12, un septième mode de réalisation est représenté. Les éléments identiques ou remplissant la même fonction à ceux des figures 1 à 4 sont référencés avec les mêmes nombres augmentés de 600.

La surface de came 620 de la lame 617 présente un profil convexe.

Un galet, non représenté, présentant un profil droit ou concave, peut coopérer avec cette lame 617 pour transmettre le couple.

La lame 617 comporte au moins deux lamelles 661 et 662 empilées l'une sur l'autre. Ces lamelles empilées 661 et 662 présentent sensiblement la même épaisseur. Ces lamelles viennent en contact via un plan de jonction PJ qui est situé à mi épaisseur de la lame ainsi assemblée. Ces lamelles ont été préalablement découpées.

On constate que les deux lamelles comportent chacune une portion de surface de came 620' et 620". Ces deux portions étant, dans un plan P comprenant l'axe de rotation (X) de l'amortisseur et contenant un point de contact entre le suiveur de came et la surface de came, symétriques par rapport au plan de jonction PJ des deux lamelles 661 et 662.

Les profils courbes des deux portions de surface de came 620' et 620" peuvent être obtenues directement lors de la découpe des lamelles 661 et 662 dans la tôle. Ces deux lamelles 661 et 662 peuvent être découpées dans une même tôle, la forme de l'une des lamelles étant le miroir de l'autre de sorte qu'elles puissent être assemblées ensuite l'une contre l'autre de part et d'autre du plan de jonction PJ.

Pour favoriser ce type de fabrication, le profil courbe 620 de la surface de came peut comporter une portion droite D, le reste du profil étant courbe. Le profil courbe peut être ainsi réalisé grâce à la dépouille de l'outil de découpe.

La portion droite D est formée par deux portions droites D1 et D2 présentes sur chaque lamelle 661 et 662. Cette portion droite est sensiblement parallèle à l'axe de rotation X. L'extremum E1 du profil courbe de la surface de came 620 est agencé sur cette portion droite D.

Le plan de jonction PJ des deux lamelles coupe la portion droite D. Le plan de jonction PJ est un plan de symétrie pour cette portion droite D.

Sur la figure 13, est présenté un huitième mode de réalisation équivalent à celui des figures 11 et 12. Dans ce mode de réalisation, les éléments identiques ou remplissant la même fonction à ceux des figures 1 à 4 sont référencés avec les mêmes nombres augmentés de 700.

Le profil courbe de la surface de came 720 est concave et présente une portion droite centrale D s'étendant de part et d'autre du plan de symétrie PJ.

Un galet, non représenté, présentant un profil courbe convexe, peut coopérer avec cette lame 717 pour transmettre le couple.

Le même type de procédé est utilisé que pour l'exemple précédent. La lame 717 est formée avec deux lamelles 761 et 762 découpées dans une tôle puis assemblées de part et d'autre du plan de jonction, également plan de symétrie, PJ. Chaque lamelle présente une portion de surface de came 720' et 720" présentant chacune une portion droite D1 et D2.

Dans le cas, non représenté, où ces deux derniers modes de réalisation seraient réalisés sans portion droite, l'extremum E1 du profil courbe de surface de came serait situé sur le plan de jonction des deux lamelles.

Notons que la présence d'une portion droite n'est pas limitée à ces deux derniers modes de réalisation. Les profils courbes des autres modes de réalisation décrits précédemment peuvent également, si on le souhaite, comporter une petite portion droite agencée sur une partie du profil courbe, en s'étendant par exemple sur 10% ou 20% du profil courbe.

Selon le plan P des figures 11 à 13, la portion droite du profil courbe s'étend sur moins de 50% de ce profil courbe, ici sur environ 30% du profil. Autrement dit, la portion droite du profil courbe s'étend sur moins de 50% de l'épaisseur de la lame, ici sur environ 30% de l'épaisseur de la lame.

Ce procédé de fabrication de la lame peut être appliqué à chacun des profils courbes présentés précédemment.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications suivantes. Par ailleurs, les figures illustrent un amortisseur de torsion dans le cadre d'un double volant amortisseur mais un tel amortisseur de torsion peut être installé sur tout dispositif adapté. Ainsi, de tels amortisseurs de torsion peuvent équiper les frictions d'embrayage, dans le cas d'une transmission manuelle ou robotisée, ou les embrayages de verrouillage, également appelés embrayages « lock-up », équipant les dispositifs d'accouplement hydraulique, dans le cas d'une transmission automatique.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Amortisseur de torsion pour dispositif de transmission de couple, notamment pour automobile, en particulier pour un dispositif d'embrayage, l'amortisseur comportant :
- un premier élément (2; 102),
- un second élément (3; 103) mobile en rotation par rapport au premier élément autour d'un axe de rotation (X),
- un organe de transmission (30; 130) porté par le second élément, cet organe de transmission comportant une lame élastique (17a, 17b; 117; 217; 317; 417; 517; 617 ; 717) agencée pour fléchir pour transmettre un couple de rotation entre ces deux éléments, la flexion de la lame élastique étant accompagnée d'une rotation relative des premier et second éléments selon l'axe de rotation X pour amortir les acyclismes de rotation entre le premier élément et le second élément, la lame élastique comportant une surface de came (20; 120; 220; 320; 420; 520; 620 ;720),
- un suiveur de came (124; 224; 324; 424; 524 ; 624) porté par le premier élément et agencé pour se déplacer sur la surface de came,
**caractérisé en ce que**, dans un plan comprenant l'axe de rotation (X) de l'amortisseur et contenant un point de contact entre le suiveur de came et la surface de came, la surface de came présente un profil courbe.

2. Amortisseur de torsion selon la revendication précédente, dans lequel le profil courbe de la surface de came présente un extremum (E1) et l'amortisseur est agencé pour que cet extremum soit sur la zone de contact entre la surface de came (20; 120; 220; 320; 420; 520; 620 ; 720) et le suiveur de came (124; 224; 324; 424; 524).

3. Amortisseur de torsion selon la revendication précédente, dans lequel l'extremum (E1) est situé sensiblement à mi-épaisseur de la lame et le profil courbe de la surface de came présente une symétrie par un plan (PS) perpendiculaire à l'axe de rotation et passant par la mi épaisseur de la lame.

4. Amortisseur de torsion selon l'une des revendications précédentes, dans lequel le profil courbe de la surface de came (20; 120; 220; 320; 420; 620 ; 720) comporte un arc de cercle.

5. Amortisseur de torsion selon la revendication précédente, dans lequel l'arc de cercle du profil courbe de la surface de came (20; 120; 220; 320; 420) s'étend sur toute l'épaisseur de la lame.

6. Amortisseur de torsion selon l'une des revendications précédentes, dans lequel la surface de came (20; 120; 220; 320; 420; 520; 620 ; 720) présente, sur toute son étendue circonférentielle autour de l'axe de rotation (X), ledit profil courbe.

7. Amortisseur de torsion selon l'une des revendications précédentes, dans lequel le suiveur de came (124; 224; 324; 424; 524) comporte un galet (121; 221; 321; 421; 521) agencé pour rouler sur la surface de came.

8. Amortisseur de torsion selon l'une des revendications précédentes, dans lequel le profil courbe de la surface de came (20, 120, 220, 420, 520, 620) est convexe.

9. Amortisseur de torsion selon l'une des revendications 1 à 7, dans lequel, dans un plan comprenant l'axe de rotation (X) de l'amortisseur et contenant un point de contact entre le suiveur de came et la surface de came, le suiveur de came (124; 224; 324; 524) présente un profil courbe.

10. Amortisseur de torsion selon la revendication précédente, dans lequel le profil courbe du suiveur de came (124; 224; 324; 524) comporte un arc de cercle.

11. Amortisseur de torsion selon l'une des revendications 9 à 10, dans lequel les profils courbes du suiveur de came (124; 224; 324; 524) et de la surface de came (120 ; 220 ; 320 ; 520 ; 620) présentent des formes permettant leur emboitement.

12. Amortisseur de torsion selon l'une des revendications 9 à 11, dans lequel l'un du suiveur de came (124 ; 224 ; 324 ; 524) et de la surface de came (120 ; 220 ; 320 ; 520 ; 620) présente un profil courbe concave, la concavité étant orientée vers l'autre du suiveur de came et de la surface de came qui présente un profil courbe convexe, le profil courbe convexe s'engageant à l'intérieur du profil courbe concave.

13. Amortisseur de torsion selon la revendication 8, en combinaison avec l'une des revendications 9 à 12, dans lequel la surface de came (120; 220; 520; 620) coopère avec le suiveur de came (124; 224; 524) qui présente un profil courbe concave orienté en direction de la surface de came, de sorte que la transmission du couple entre la surface de came et le suiveur de came est effectuée via le profil courbe convexe de la surface de came à l'intérieur de la concavité du suiveur de came.

14. Amortisseur de torsion selon la revendication précédente, dans lequel le profil courbe convexe de la surface de came (120; 220; 520; 620) est un arc de cercle et le profil courbe concave du suiveur de came (124; 224; 624) est un arc de cercle, le profil courbe de la surface de came présentant un rayon inférieur ou égal à celui du profil courbe du suiveur de came.

15. Amortisseur de torsion selon l'une des revendications 1 à 8, dans lequel, dans un plan comprenant l'axe de rotation (X) de l'amortisseur et contenant un point de contact entre le suiveur de came et la surface de came, le suiveur de came (424) présente un profil droit.

## Patentansprüche

1. Torsionsdämpfer für eine Übertragungsvorrichtung eines Drehmoments, insbesondere für ein Kraftfahrzeug, ganz besonders für eine Kupplungsvorrichtung, wobei der Dämpfer Folgendes umfasst:
- ein erstes Element (2; 102),
- ein zweites rotationsbewegliches Element (3; 103) im Verhältnis zu dem ersten Element um eine Drehachse (X),
- ein Übertragungsglied (30; 130), das durch das zweite Element getragen wird, wobei dieses Übertragungsglied eine elastische Zunge (17a, 17b; 117; 217; 317; 417; 517; 617; 717) umfasst, die dazu angeordnet ist, nachzugeben, um ein Drehmoment zwischen diesen beiden Elementen zu übertragen, wobei die Federung der elastischen Zunge von einer relativen Drehung des ersten und zweiten Elementes gemäß der Drehachse X begleitet wird, um die Ungleichförmigkeiten bei der Drehung zwischen dem ersten Element und dem zweiten Element zu dämpfen, wobei die elastische Zunge eine Nockenoberfläche (20; 120; 220; 320; 420; 520; 620; 720;) umfasst,
- eine Nockennachlaufeinrichtung (124; 224; 324; 424; 524; 624), die durch das erste Element getragen wird und dazu angeordnet ist, sich auf der Nockenoberfläche zu bewegen,
**dadurch gekennzeichnet, dass** in einer Ebene, welche die Drehachse (X) des Dämpfers aufweist und eine Kontaktstelle zwischen der Nockennachlaufeinrichtung und der Nockenoberfläche enthält, die Nockenoberfläche ein Kurvenprofil aufweist.

2. Torsionsdämpfer nach dem vorhergehenden Anspruch, wobei das Kurvenprofil der Nockenoberfläche ein Extremum (E1) aufweist, und der Dämpfer dazu angeordnet ist, dass sich dieses Extremum auf dem Kontaktbereich zwischen der Nockenoberfläche (20; 120; 220; 320; 420; 520; 620; 720) und der Nockennachlaufeinrichtung (124; 224; 324; 424; 524) befindet.

3. Torsionsdämpfer nach dem vorhergehenden Anspruch, wobei das Extremum (E1) im Wesentlichen an der Hälfte der Dicke der Zunge liegt, und das Kurvenprofil der Nockenoberfläche eine Symmetrie durch eine Ebene (PS) senkrecht zu der Drehachse aufweist und durch die Hälfte der Dicke der Zunge verläuft.

4. Torsionsdämpfer nach einem der vorhergehenden Ansprüche, wobei das Kurvenprofil der Nockenoberfläche (20; 120; 220; 320; 420; 620; 720) einen Kreisbogen umfasst.

5. Torsionsdämpfer nach dem vorhergehenden Anspruch, wobei sich der Kreisbogen des Kurvenprofils der Nockenoberfläche (20; 120; 220; 320; 420) über die gesamte Dicke der Zunge erstreckt.

6. Torsionsdämpfer nach einem der vorhergehenden Ansprüche, wobei die Nockenoberfläche (20; 120; 220; 320; 420; 520; 620; 720) auf ihrer gesamten umfänglichen Erstreckung um die Drehachse (X) das Kurvenprofil aufweist.

7. Torsionsdämpfer nach einem der vorhergehenden Ansprüche, wobei die Nockennachlaufeinrichtung (124; 224; 324; 424; 524) eine Rolle (121; 221; 321; 421; 521) umfasst, die dazu angeordnet ist, auf der Nockenoberfläche zu rollen.

8. Torsionsdämpfer nach einem der vorhergehenden Ansprüche, wobei das Kurvenprofil der Nockenoberfläche (20; 120; 220; 420; 520; 620) konvex ist.

9. Torsionsdämpfer nach einem der Ansprüche 1 bis 7, wobei in einer Ebene, welche die Drehachse (X) des Dämpfers aufweist und eine Kontaktstelle zwischen der Nockennachlaufeinrichtung und der Nockenoberfläche enthält, die Nockennachlaufeinrichtung (124; 224; 324; 524) ein Kurvenprofil aufweist.

10. Torsionsdämpfer nach dem vorhergehenden Anspruch, wobei das Kurvenprofil der Nockennachlaufeinrichtung (124; 224; 324; 524) einen Kreisbogen umfasst.

11. Torsionsdämpfer nach einem der Ansprüche 9 bis 10, wobei die Kurvenprofile der Nockennachlaufeinrichtung (124; 224; 324; 524) und der Nockenoberfläche (120; 220; 320; 520; 620) Formen aufweisen, welche ihr Ineinandergreifen ermöglichen.

12. Torsionsdämpfer nach einem der Ansprüche 9 bis 11, wobei eine, entweder die Nockennachlaufeinrichtung (124; 224; 324; 524) oder die Nockenoberfläche (120; 220; 320; 520; 620) ein konkaves Kurvenprofil aufweist, wobei die Konkavität zu der anderen, entweder der Nockennachlaufeinrichtung oder der Nockenoberfläche gerichtet ist, welche ein konvexes Kurvenprofil aufweist, wobei das konvexe Kurvenprofil in das Innere des konkaven Kurvenprofils eingreift.

13. Torsionsdämpfer nach dem Anspruch 8 in Kombination mit einem der Ansprüche 9 bis 12, wobei die Nockenoberfläche (120; 220; 520; 620) mit der Nockennachlaufeinrichtung (124; 224; 524) zusammenwirkt, die ein konkaves Kurvenprofil aufweist, das in Richtung der Nockenoberfläche dergestalt gerichtet ist, dass die Drehmomentübertragung zwischen der Nockenoberfläche und der Nockennachlaufeinrichtung über das konvexe Kurvenprofil der Nockenoberfläche im Inneren der Konkavität der Nockennachlaufeinrichtung erfolgt.

14. Torsionsdämpfer nach dem vorhergehenden Anspruch, wobei das konvexe Kurvenprofil der Nockenoberfläche (120; 220; 520; 620) aus einem Kreisbogen besteht und das konkave Kurvenprofil der Nockennachlaufeinrichtung (124; 224; 624) aus einem Kreisbogen besteht, wobei das Kurvenprofil der Nockenoberfläche einen kleineren oder gleichwertigen Radius zu dem des Kurvenprofils der Nockennachlaufeinrichtung aufweist.

15. Torsionsdämpfer nach einem der Ansprüche 1 bis 8, wobei in einer Ebene, welche die Drehachse (X) des Dämpfers aufweist und eine Kontaktstelle zwischen der Nockennachlaufeinrichtung und der Nockenoberfläche enthält, die Nockennachlaufeinrichtung (424) ein gerades Profil aufweist.

## Claims

1. Torsion damper for a torque transmission device, notably for a motor vehicle, in particular for a clutch device, the damper comprising:
- a first element (2; 102),
- a second element (3; 103) rotatable with respect to the first element about an axis of rotation (X),
- a transmission member (30; 130) borne by the second element, this transmission member comprising an elastic blade (17a, 17b; 117; 217; 317; 417; 517; 617; 717) arranged to bend to transmit a rotational torque between these two elements, the bending of the elastic blade being accompanied by a relative rotation of the first and second elements about the axis of rotation X in order to damp the rotational irregularities between the first element and the second element, the elastic blade comprising a cam surface (20; 120; 220; 320; 420; 520; 620; 720),
- a cam follower (124; 224; 324; 424; 524; 624) borne by the first element and arranged to move on the cam surface,
**characterized in that**, in a plane comprising the axis of rotation (X) of the damper and containing a point of contact between the cam follower and the cam surface, the cam surface has a curved profile.

2. Torsion damper according to the preceding claim, in which the curved profile of the cam surface has an extremum (E1) and the damper is arranged such that this extremum is on the region of contact between the cam surface (20; 120; 220; 320; 420; 520; 620; 720) and the cam follower (124; 224; 324; 424; 524).

3. Torsion damper according to the preceding claim, in which the extremum (E1) is situated substantially at the mid-thickness of the blade and the curved profile of the cam surface has a symmetry by a plane (PS) perpendicular to the axis of rotation and passing through the mid-thickness of the blade.

4. Torsion damper according to one of the preceding claims, in which the curved profile of the cam surface (20; 120; 220; 320; 420; 620; 720) comprises an arc of a circle.

5. Torsion damper according to the preceding claim, in which the arc of the circle of the curved profile of the cam surface (20; 120; 220; 320; 420) extends over the whole thickness of the blade.

6. Torsion damper according to one of the preceding claims, in which the cam surface (20; 120; 220; 320; 420; 520; 620; 720) has the said curved profile over its whole circumferential extent about the axis of rotation (X).

7. Torsion damper according to one of the preceding claims, in which the cam follower (124; 224; 324; 424; 524) comprises a roller (121; 221; 321; 421; 521) arranged to roll on the cam surface.

8. Torsion damper according to one of the preceding claims, in which the curved profile of the cam surface (20, 120, 220, 420, 520, 620) is convex.

9. Torsion damper according to one of Claims 1 to 7, in which, in a plane comprising the axis of rotation (X) of the damper and containing a point of contact between the cam follower and the cam surface, the cam follower (124; 224; 324; 524) has a curved profile.

10. Torsion damper according to the preceding claim, in which the curved profile of the cam surface (124; 224; 324; 524) comprises an arc of a circle.

11. Torsion damper according to either of Claims 9 and 10, in which the curved profiles of the cam follower (124; 224; 324; 524) and of the cam surface (120; 220; 320; 520; 620) have shapes allowing their interengagement.

12. Torsion damper according to one of Claims 9 to 11, in which one of the cam follower (124; 224; 324; 524) and of the cam surface (120; 220; 320; 520; 620) has a concave curved profile, the concavity being oriented towards the other of the cam follower and of the cam surface which has a convex curved profile, the convex curved profile engaging inside the concave curved profile.

13. Torsion damper according to Claim 8, in combination with one of Claims 9 to 12, in which the cam surface (120; 220; 520; 620) cooperates with the cam follower (124; 224; 524) which has a concave curved profile oriented in the direction of the cam surface such that the transmission of the torque between the cam surface and the cam follower is effected via the convex curved profile of the cam surface inside the concavity of the cam follower.

14. Torsion damper according to the preceding claim, in which the convex curved profile of the cam surface (120; 220; 520; 620) is an arc of a circle and the concave curved profile of the cam follower (124; 224; 624) is an arc of a circle, the curved profile of the cam surface having a radius which is less than or equal to that of the curved profile of the cam follower.

15. Torsion damper according to one of Claims 1 to 8, in which, in a plane comprising the axis of rotation (X) of the damper and containing a point of contact between the cam follower and the cam surface, the cam follower (424) has a straight profile.
